# EUROPÄISCHE PATENTSCHRIFT

(11) **EP 1 535 768 B1**
(45) Veröffentlichungstag und Bekanntmachung des Hinweises auf die Patenterteilung: **06.08.2008**
(21) Anmeldenummer: 04025853.5
(22) Anmeldetag: 30.10.2004
(51) Int. Cl.: B60H 1/00, B60H 1/34

(54) **Vorrichtung und Verfahren zur Einstellung eines Stellgliedes**
Apparatus and method for adjusting an actuator
Dispositif et procédé pour le réglage d'un actionneur

(30) Priorität: 26.11.2003 DE 10355248
(43) Veröffentlichungstag der Anmeldung: 01.06.2005
(73) Patentinhaber: Volkswagen Aktiengesellschaft, 38436 Wolfsburg (DE)
(72) Erfinder: Kiesewetter, Thomas, 38118 Braunschweig (DE); Neuner, Helge, Dr., 38300 Wolfenbüttel (DE); Weiser, Martin, Dr., 31234 Edemissen (DE)

(56) Entgegenhaltungen:
- DE-A1- 10 111 400
- DE-A1- 10 121 909
- DE-A1- 19 910 774
- DE-U1- 20 211 463
- US-B1- 6 386 965

## Beschreibung

Die Erfindung betrifft eine Vorrichtung zur Einstellung eines Stellgliedes, insbesondere in einem Kraftfahrzeug, mit mindestens einem manuell betätigbaren Bedienelement zur Einstellung des Stellgliedes nach dem Oberbegriff des Anspruchs 1. Die Erfindung betrifft weiterhin ein zugehöriges Verfahren nach dem Oberbegriff des Anspruchs 13.

Aus der DE 199 10 774 A1 ist eine Fahrzeug-Frischluftdüseneinrichtung mit einem schachtartigen Düsengehäuse bekannt, das einen Frontrahmen und Vertikal- und Horizontallamellen aufweist. Die Vertikallamellen sind dabei über ein erstes Mitnehmerorgan mit einem ersten Verstellrad und die Horizontallamellen sind über ein zweites Mitnehmerorgan mit einem zweiten Verstellrad verbunden. Zur Erzielung eines ausgezeichneten Bedien- und Verstellkomforts der Fahrzeug-Frischluftdüseneinrichtung weist das erste und das zweite Verstellrad jeweils einen mit einem Antriebselement einer Getriebeeinrichtung kämmenden Antriebszahnradkranz auf, wobei das jeweilige Antriebselement mit einem zugehörigen Elektromotor verbunden ist.

In der DE 101 11 400 A1 wird ein Stellantrieb für Heizungs-, Lüftungs- oder Klimaklappen in einem Kraftfahrzeug offenbart. Der Stellantrieb weist dabei von einem Elektromotor angetriebene Antriebswellen zur Belüftungsklappenverstellung, eine Leiterplatte mit konzentrisch auf Kreisringen mit unterschiedlichen Radien angeordneten Schleifbahnen und einen mit der Antriebswelle verdrehfest verbundenen, sämtlichen Schleifbahnen zugeordneten Schleifer auf, der für jeden Kreisring einen Schleifkontakt aufweist, wobei die Versorgung des Elektromotors gesteuert über den Schleifer und die Schleifbahnen erfolgt.

Aus der DE 101 21 909 A1 ist eine Belüftungsvorrichtung für Fahrzeuge bekannt mit Luftströmungskanälen und einem Luftausströmer. Die Belüftungsvorrichtung umfasst Einrichtungen zur Steuerung der Luftrichtung und der Luftmenge, die elektrisch betätigt werden können. Dabei kann der Aufbau des Luftausströmers derart gewählt werden, dass die Antriebe sich von außen manuell bewegen lassen, so dass eine Verstellung direkt am Luftausströmer erfolgen kann. Um die Position der Elemente zur Luftmengensteuerung und Luftrichtungssteuerung stets zu kennen, auch wenn sie manuell verstellt wurden, werden induzierte Spannungen der Motorwicklungen ausgewertet oder Hall-Sensoren in Kombination mit dem Rotor oder zusätzlichen Magneten eingesetzt.

Schließlich ist aus der US 6,386,965 B1 ein automatisches Luftstromsystem für den Fahrzeuginnenraum bekannt, bei dem Luft automatisch in Bereiche des Innenraums geleitet werden, in denen Fahrzeuginsassen sitzen.

Aufgabe der Erfindung ist es, eine Vorrichtung bzw. ein Verfahren, insbesondere für ein Kraftfahrzeug, bereitzustellen, bei denen die Betätigung des Bedienelements für den Nutzer komfortabler ist.

Die Aufgabe der Erfindung wird durch die Merkmale einer Vorrichtung zur Einstellung eines Stellgliedes gemäß Anspruch 1 sowie durch die Merkmale eines Verfahrens zur Einstellung eines Stellgliedes gemäß Anspruch 13 gelöst. Vorteilhafte Fortbildungen der Erfindung sind in den abhängigen Ansprüchen genannt.

Erfindungsgemäß ist mindestens eine haptische Betätigungseigenschaft des Bedienelements durch eine Ansteuereinrichtung des Aktuators und/oder durch eine Steuereinrichtung für den Aktuator vorgebbar. Hiermit können beispielsweise Raststellungen des Bedienelementes simuliert werden. Auch Endanschläge des Bedienelements sind vorgebbar. Auch ein zum Endanschlag hin ansteigender Kraftverlauf bei Betätigung ist an dem Bedienelement über den Aktuator vorgebbar. Dabei ist es denkbar, dass ein Benutzer individuelle Einstellungen der Haptik (z.B. Anzahl der Raststellungen, Verdrehkraft, Verdrehkraftverlauf) des Bedienelements vorgeben kann. Diese Einstellungen können auch vorteilhaft für einzelne Benutzer einstellbar und abspeicherbar sein. Es ist möglich, dass ein Aktuator eine voreingestellte oder durch einen Benutzer wählbare Master-Funktion übernimmt, wohingegen alle anderen Aktuatoren eine Slave-Funktion einnehmen.

Wenn das Stellglied durch einen Aktuator und manuell durch das Bedienelement verstellbar ist, wobei der Aktuator, das Bedienelement und das Stellglied mechanisch gekoppelt sind und eine manuelle Verstellung des Bedienelementes durch eine Auswerteeinrichtung aufgrund von mindestens einem elektrischen Signal des Aktuators sensierbar ist, kann der Aktuator selber vorteilhaft als Sensor verwendet werden. Bei der Verstellung des Aktuators durch Betätigung des Bedienelementes wird in dem Aktuator eine elektrische Größe induziert. Diese elektrische Größe oder Größen steht bzw. stehen in einem Zusammenhang mit der Verstellung.

Daher ist aus dieser Größe bzw. diesen Größen direkt oder indirekt auf die mechanische Verstellung oder der Änderung der Verstellung schließbar.

Weiterhin vorteilhaft ist es, wenn mit einer Auswerteeinrichtung zumindest ein Momentanwert oder ein zeitlicher Verlaut der Momentanwerte einer elektrischen Spannung und/oder zumindest eines Stromsignals des Aktuators auswertbar sind. Somit kann eine auf den Aktuator abgestimmte Auswerteeinrichtung die Bewegungsanalyse des Bedienelementes vornehmen. Bei Verwendung eines Schrittmotors als Aktuator können beispielsweise die durch die Drehung des Rotors induzierten Spannungsimpulse ausgewertet werden. In diesem Fall wird somit der zeitliche Verlauf der Spannung ausgewertet. Ein dabei induzierter Spannungsimpuls entspricht dabei einem festen Drehwinkel des Rotors. Sofern der Rotor als Linearmotor ausgeführt ist, entspricht ein induzierter Spannungsimpuls einem festen linearen Versatz des Aktuators bzw. des Bedienelementes. Je nach Vorzeichen der gemessenen elektrischen Größen, kann auf die Dreh- bzw. Bewegungsrichtung geschlossen werden.

Dadurch, dass das Stellglied und/oder das Bedienelement durch ein Aktuator automatisch mittels einer Steuereinrichtung verstellbar ist und mindestens eine Größe und/oder mindestens ein Parameter zumindest der automatischen Verstellung des Stellgliedes anzeigbar oder erkennbar ist, ist ein Benutzer auch über die automatische Verstellung der Steuereinrichtung informierbar. Der Benutzer kann das Stellglied über ein Bedienelement verstellen, wobei auch eine automatische Verstellung möglich ist. Sofern eine Steuereinrichtung das Stellglied und/oder das Bedienelement automatisch verstellt, bekommt der Benutzer eine visuelle Rückmeldung.

Weiterhin vorteilhaft ist es, dass zumindest eine Größe und/oder mindestens ein Parameter der manuellen Verstellung des Stellgliedes anzeigbar oder erkennbar ist. So kann beispielsweise vorteilhaft ein Verengungsgrad eines Luftströmungskanals einer Innenbelüftung eines Kraftfahrzeugs angezeigt werden. Somit ist ein Benutzer beispielsweise je nach Anzeigebedarf über den Verengungsgrad informierbar. Ihm ist somit bekannt, ob eine weitere Verstellung (Öffnung/Schließung) möglich ist.

Wenn mindestens eine Größe und/oder mindestens ein Parameter zumindest der automatischen Verstellung des Stellgliedes anzeigbar oder erkennbar ist, kann ein Benutzer die Aktivitäten einer Steuer- und/oder Regeleinrichtung in Bezug auf das Stellglied einfach erkennen. Er ist somit beispielsweise informiert, ob sich das Verstellglied beispielsweise an einem Endanschlag oder einer Max-/Min-Stellung befindet.

Wenn ein Aktuator über eine Mitkopplungseinrichtung an das Bedienelement oder das Stellglied angebunden ist, kann ein günstiger Einbauort für den Aktuator gewählt werden. Eine Mitkopplungseinrichtung, beispielsweise mechanischer oder elektrischer Art, bewegt dann ein Bedienelement oder ein Stellglied mit. Es ist auch denkbar, dass ein elektrisch gekoppelter zweiter Aktuator das Bedienelement oder das Stellglied bewegt. Mit dieser Vorrichtung kann eine Bewegung des Bedienelements durch einen Benutzer auch vorteilhaft durch einen Aktuator unterstützt werden. Durch die dann als leichtgängig wahrgenommene Bewegung der Bedieneinrichtung wird ein gesteigertes Komfortempfinden bei einem Benutzer während der Bedienung wahrgenommen. Weiterhin kann diese Bewegungsunterstützung sinnvoll sein, sofern eine schwergängige Mechanik zur Bewegung des Stellgliedes und/oder der Bedieneinrichtung erforderlich ist. Bei Verstellung des Bedienelements wird dann der Aktuator ebenfalls aktiviert, um die manuelle Verstellung energetisch zu unterstützen.

Mit mindestens einer Einrichtung zur Erfassung der Position und/oder Positionsänderung des Aktuators ist eine zusätzliche Rückmeldung über die Bewegung zu beispielsweise einer Steuer- und/oder Regeleinrichtung möglich. Sofern eine hohe Bewegungsauflösung oder eine Redundanz bei der Bewegungserfassung erforderlich ist, kann eine Einrichtung zur Erfassung der Position und/oder Positionsänderung eingesetzt werden, welche neben der Auswertung der Aktuatorsignale zusätzlich die erfassten Bewegungssignale zur Verfügung stellt.

Die Erfassung der Position kann auch durch eine Anzeige direkt oder indirekt angezeigt werden. Unter direkter Anzeige wird eine Anzeige des erfassten Wertes ohne weitreichende Umrechnung verstanden, wobei unter indirekter Anzeige eine Umrechnung des erfassten Wertes in andere Werte oder Einheiten gemeint ist. Eine Anzeige kann dabei in Stufen oder auch kontinuierlich erfolgen. Vorteilhaft kann auch eine Einrichtung zur Erfassung der Position und/oder der Positionsänderung des Bedienelements und/oder der Mitkopplungseinrichtung und/oder des Stellglieds vorgesehen sein.

Dadurch, dass die Art und/oder der Betrag der Verstellung des Stellgliedes auf dem Bedienelement anzeigbar oder erkennbar ist, ist eine zusätzliche Anzeige nicht zwingend erforderlich. Durch die Bewegung des Bedienelements erkennt ein Benutzer umgehend die Stellung des Stellgliedes auf dem Bedienelement selbst. Unter Art der Verstellung des Stellgliedes wird verstanden, dass bestimmte Stufen einstellbar sind, wie beispielsweise "Auf" oder "Zu".

Ein Betrag der Verstellung kann beispielsweise auf einer normierten Skala von 0-100 %, 1-10, I, II, III, usw. dargestellt sein. Die Anzeige kann beispielsweise auch als optische Anzeige (z. B. LED) auf und/oder neben dem Bedienelement angeordnet sein.

Wenn der Aktuator aufgrund eines Stellsignals verstellbar ist, welches an der Steuereinrichtung und/oder dem Aktuator anlegbar ist, kann eine Verstellung auch aufgrund von externen Ereignissen oder Stellsignalen vorgenommen werden. Im Fall eines Kraftfahrzeugs ist dieses beispielsweise vorteilhaft, wenn aufgrund des "Zündung-EIN-Signals" eine definierte Anfangsposition anfahrbar sein soll, wohingegen bei einem "Zündung-AUS-Signal" eine definierte Endstellung einnehmbar sein soll.

Dadurch, dass mit mindestens einem ersten Bedienelement mindestens ein zweites Bedienelement synchron oder asynchron gleich- und/oder gegensinnig verstellbar ist, können eine Reihe von vorteilhaften Einstellkonfigurationen durchgeführt werden. So ist es beispielsweise bei einer Kraftfahrzeuglüftung möglich, dass bei Verstellung eines ersten Luftausströmers nach rechts alle weiteren Luftausströmer auch nach rechts verstellt werden. Es ist jedoch auch denkbar, dass bei Verstellung des Luftausströmers in Richtung des Zentrums des Kraftfahrzeuginnenraums, alle weiteren Luftausströmer auch in Richtung des Zentrums des Kraftfahrzeuginnenraums verstellt werden. Diese Verstellungen können dabei synchron, d.h. gleichzeitig oder asynchron, dieses bedeutet z.B. zeitlich nacheinander, vorgenommen werden.

Eine weitere vorteilhafte Ausführung der Erfindung besteht darin, dass mindestens ein Aktuator als Schrittmotor ausgebildet ist. Damit können wiederholbar genau definierte Stellungen des Aktuators eingestellt werden. Weiterhin zeichnen sich diese Aktuatoren durch eine kostengünstige Ansteuerelektronik aus.

In einer weiteren Ausgestaltung der Erfindung ist bei Betätigung des Bedienelements über eine definierte Position dessen haptische Eigenschaft veränderbar. So besitzt beispielsweise eine Einrichtung zur Belüftung und/oder Klimatisierung eines Kraftfahrzeugs oder eines geschlossenen Raumes in der Regel bestimmte Einstellungsgrenzen, in denen eine Belüftung und/oder Klimatisierung gewährleistet werden kann. Verstellt ein Benutzer eine Vorrichtung zur Luftmengenregulierung (z.B. durch Verengung des Strömungsquerschnitts), so kann die Einrichtung zur Belüftung und/oder Klimatisierung (Steuereinrichtung) beispielsweise die Luftströmung erhöhen, um ein eingestelltes Temperaturniveau im Fahrzeuginnenraum oder dem im wesentlichen abgeschlossenen Raum weiter zu halten.

Wenn ein Benutzer jedoch Parameter manuell vorgibt, beispielsweise durch die Bedieneinrichtung, bei denen die Einrichtung zur Belüftung und/oder Klimatisierung ein Temperaturniveau nicht halten kann (außerhalb eingestellter Regelungsgrenzen), kann diese Grenze durch eine haptische Veränderung des Bedienelements dem Benutzer direkt mitgeteilt werden. Für einen Benutzer ist somit auch ohne optische Kontrolle umgehend erkennbar, dass der automatische Regelmodus verlassen wird.

Gegenstand der Anmeldung ist weiterhin ein erfindungsgemäßes Verfahren, bei dem das Bedienelement und/oder das Stellglied über einen Aktuator mittels einer Steuereinrichtung verstellt wird. Somit wird vorteilhaft erreicht, dass eine Verstellung des Stellgliedes durch den Benutzer energetisch unterstützt wird. Weiterhin erhält ein Benutzer eine Rückmeldung im Falle einer automatischen Verstellung des Stellgliedes, indem das Bedienelement auch verstellt wird.

In den Zeichnungen sind beispielhafte Ausführungen der Erfindung dargestellt. Es zeigen:
- Figur 1:: eine schematische Darstellung einer Vorrichtung zur Einstellung eines Stellgliedes
und
- Figur 2:: eine Vorrichtung zur Luftmengenregulierung eines Lüftströmungskanals mit einer erfindungsgemäßen Einrichtung.

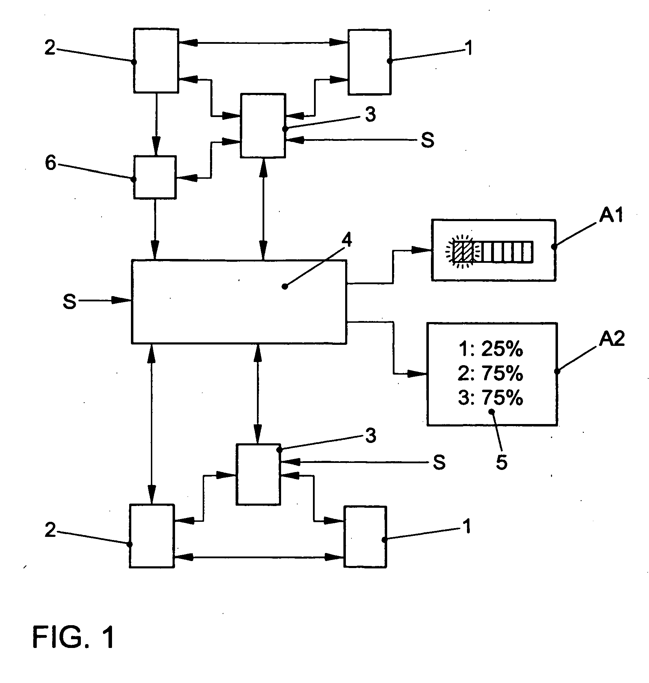

In Figur 1 ist eine schematische Darstellung einer Vorrichtung zur Einstellung eines Stellgliedes 1,21 dargestellt. Das Stellglied 1,21 ist über ein Bedienelement 2,22 als auch durch einen Aktuator 3,23 verstellbar, wobei der Aktuator 3,23 entweder das Stellglied 1,21 und/oder das Bedienelement 2,22 verstellt und das jeweils andere Element bzw. Glied durch eine Mitkopplungseinrichtung 25 verstellt wird. Die Mitkopplungseinrichtung 25 kann dabei mechanischer Art sein, dass ein Bewegungsablauf des Aktuators beispielsweise mittels einer Stange oder einer Zwangsführung auf ein Bedienelement 2,22 übertragen wird. In Figur 1 sind Wirk- und/oder Daten- oder Signalverbindungen durch Pfeile bzw. Doppelpfeile dargestellt.

Eine Einrichtung 6,26 erfasst zusätzlich zum Aktuator 3, 23 die Position und/oder Positionsänderung eines Bedienelements 2,22 und/oder eines Stellglieds 1,21 und/oder einer Mitkopplungseinrichtung 25. In Figur 1 ist dabei nur die Erfassung der Position bzw. der Positionsänderung des Bedienelements 2,22 aufgeführt.

Mit einem Stellsignal S kann der Aktuator 3,23 derart aktiviert werden, dass mindestens eine vordefinierte Position anfahrbar ist. Dieses Stellsignal S ist in dem Ausführungsbeispiel auch einer Steuereinrichtung 4,24 zugeführt. Die Steuereinrichtung 4 kann beispielsweise als Lüftungs- oder Klimatisierungseinrichtung ausgeführt sein und Stellsignale S an weitere Aktuatoren 3,23 zur Verstellung eines Stellglieds 1,21 eines Luftströmungskanals 27 bereitstellen. Die Steuereinrichtung 4,24 übernimmt weiterhin die Funktion der Ansteuerung einer zusätzlichen Anzeige A, A1, A2, damit ein Benutzer mindestens eine Stellung eines Stellglieds 1,21 oder eines Bedienelements 2,22 oder eines Aktuators 3,23 oder einer Mitkopplungseinrichtung 25 erfassen kann. Die Steuereinrichtung 4, 24 kann auch als Auswerteeinrichtung ausgebildet sein und elektrische Signale des Aktuators 3, 23 analysieren und dadurch die Verstellung des Bedienelementes 2, 22 feststellen.

In Figur 1 ist Anzeige A1 als Balkenanzeige dargestellt, wobei zwei von acht Balken schraffiert eingezeichnet sind und damit eine Aktivierung symbolisieren. Ein Benutzer erkennt somit, dass beispielsweise ein Stellglied 1,21 um einen Grad 2/8 oder 25% verstellt wurde. In einer weiteren Anzeige A2 sind Parameter der Steuereinrichtung 4, 24 dargestellt, welche als 1: 25%, 2: 75% und 3: 75% in der Figur 1 eingezeichnet sind. Diese Parameter können beispielsweise Stellungen der Stellglieder 1,21 eines Luftströmungskanals darstellen, wobei ein Luftströmungskanal 27 zu 25% und die weiteren Luftströmungskanäle zu 75% geöffnet sind. Die Darstellung dieser Parameter können eingebunden sein in ein Bedienmenü der Steuereinrichtung 4,24, welches durch einen Benutzer aufrufbar ist. Im Falle eines Kraftfahrzeuges, kann dieses Bedienmenü beispielsweise durch einen bzw. in einem Bordcomputer des Fahrzeugszeugs aufrufbar sein.

Unterhalb der in Figur 1 eingezeichneten Steuereinrichtung 4,24 ist ein Stellglied 1,21 mit einem Bedienelement 2,22 und einem Aktuator 3,23 ohne eine Einrichtung zur Erfassung der Position und/oder Positionsänderung 6,26 dargestellt, da der Aktuator 3,23 erfindungsgemäß als Sensor die Erfassung der Positionsänderung dient. Wird als Aktuator 3,23 beispielsweise ein Schrittmotor eingesetzt, so kann eine manuelle Verstellung des Schrittmotors durch Erfassung einer induzierten Spannung in den Motorwicklungen des Schrittmotors detektiert werden. Somit kann der Schrittmotor als Aktuator 3,23 und als Einrichtung zur Erfassung der Position und/oder Positionsänderung 6,26 sinnvoll kombiniert werden. Dieses ergibt neben einer Platzeinsparung auch Kostenvorteile.

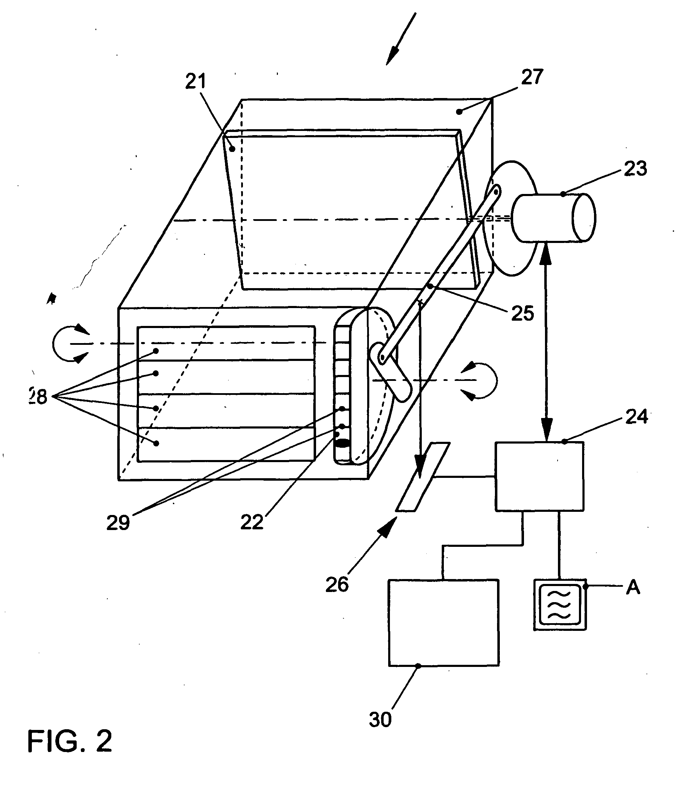

In Figur 2 ist eine Vorrichtung zur Luftmengenregulierung eines Luftströmungskanals 27 mit einer erfindungsgemäßen Einrichtung dargestellt. Mit einem Bedienelement 2,22 kann ein Stellglied 1,21 über eine Mitkopplungseinrichtung 25 verstellt werden. An das Stellglied 1,21 ist weiterhin ein Aktuator 3,23 angebunden, welcher durch eine Steuereinrichtung 4,24 ansteuerbar ist, wobei eine Position der Mitkopplungseinrichtung 25 über eine Einrichtung zur Erfassung der Position und/oder Positionsänderung 6,26 erfassbar ist. Die Steuereinrichtung 4, 24 kann erfindungsgemäß auch als Auswerteeinrichtung ausgebildet sein, so dass über Auswertung der elektrischen Signale des Aktuators dessen Bewegung ermittelbar ist. Die Einrichtung zur Erfassung der Position und/oder Positionsänderung 6, 26 wäre in diesem Fall obsolet.

Die Steuereinrichtung 4,24 kann Parameter 5 des Stellglieds 1,21 auf einer Anzeige A, A1, A2 darstellen. Die Steuereinrichtung 4,24 kann weiterhin Bestandteil einer Einrichtung zur Klimatisierung 30 sein. An der Einrichtung zur Klimatisierung 30 können weitere Steuereinrichtungen 4,24 und/oder Stellglieder 1,21 mit Bedienelementen 2,22 und Aktuatoren 3,23 erfindungsgemäß angeschlossen sein.

Es ist auch möglich, dass mindestens eine Luftleiteinrichtung 28 eines Luftströmungskanals 27 erfindungsgemäß verstellbar ist. Eine Verstellung der Luftleiteinrichtung 28, welche im wesentlichen horizontal und/oder vertikal vornehmbar ist, kann somit manuell als auch automatisch erfolgen. Ein Benutzer ist dabei ständig über die Verstellung über eine Anzeige A, A1, A2 informiert. Eine Anzeige kann auch über Markierungen 29 eines Bedienelements 2,22 realisiert sein.

### Neue Bezugszeichenliste

- 1,21: Stellglied
- 2,22: Bedienelement
- 3,23: Aktuator
- 4,24: Steuereinrichtung
- 5: Parameter
- 25: Mitkopplungseinrichtung
- 6,26: Einrichtung zur Erfassung der Position und/oder Positionsänderung
- 27: Luftströmungskanal
- 28: Luftleiteinrichtung
- 29: Markierung
- 30: Einrichtung zur Klimatisierung
- A,A1,A2: Anzeige
- S: Stellsignal

## Patentansprüche

1. Vorrichtung zur Einstellung eines Stellgliedes (1, 21), insbesondere in einem Kraftfahrzeug, mit mindestens einem manuell betätigbaren Bedienelement (2, 22) zur Einstellung des Stellgliedes (1, 21), wobei das Stellglied (1, 21) durch einen Aktuator (3, 23) und manuell durch das Bedienelement (2, 22) verstellbar istund wobei der Aktuator (3, 23), das Bedienelement (2, 22) und das Stellglied (1, 21) mechanisch gekoppelt sind und eine manuelle Verstellung des Bedienelementes (2, 22) durch eine Auswerteeinrichtung aufgrund von mindestens einem elektrischen Signal des Aktuators (3, 23) sensierbar ist, **dadurch gekennzeichnet, dass** mindestens eine haptische Betätigungseigenschaft des Bedienelements (2, 22) durch eine Ansteuereinrichtung des Aktuators (3, 23) und/oder durch eine Steuereinrichtung (4, 24) für den Aktuator (3, 23) vorgebbar ist.

2. Vorrichtung nach Anspruch 1, **dadurch gekennzeichnet, dass** mit der Auswerteeinrichtung zumindest ein Momentanwert oder ein zeitlicher Verlauf der Momentanwerte einer elektrischen Spannung und/oder zumindest eines Stromsignals des Aktuators (3, 23) auswertbar sind.

3. Vorrichtung nach Anspruch 1 oder 2, **dadurch gekennzeichnet, dass** das Stellglied (1, 21) und/oder das Bedienelement (2, 22) durch einen Aktuator (3, 23) automatisch mittels einer Steuereinrichtung (4, 24) verstellbar ist

4. Vorrichtung nach einem der voranstehenden Ansprüche, **dadurch gekennzeichnet, dass** zumindest eine Größe und/oder mindestens ein Parameter (5) der manuellen Verstellung des Stellgliedes (1, 21) anzeigbar oder erkennbar ist.

5. Vorrichtung nach einem der voranstehenden Ansprüche, **dadurch gekennzeichnet, dass** mindestens eine Größe und/oder mindestens ein Parameter (5) zumindest der automatischen Verstellung des Stellgliedes (1, 21) anzeigbar oder erkennbar ist.

6. Vorrichtung nach einem der voranstehenden Ansprüche, **dadurch gekennzeichnet, dass** der Aktuator (3, 23) über eine Mitkopplungseinrichtung (25) an das Bedienelement (2, 22) oder das Stellglied (1, 21) angebunden ist.

7. Vorrichtung nach einem der voranstehenden Ansprüche, **dadurch gekennzeichnet, dass** mindestens eine Einrichtung zur Erfassung der Position und/oder Positionsänderung (6, 26) des Bedienelements (2, 22) und/oder der Mitkopplungseinrichtung (25) und/oder des Stellglieds (1, 21) vorgesehen ist.

8. Vorrichtung nach einem der voranstehenden Ansprüche, **dadurch gekennzeichnet, dass** die Art und/oder der Betrag der Verstellung des Stellgliedes (1, 21) auf dem Bedienelement (2, 22) anzeigbar oder erkennbar ist.

9. Vorrichtung nach einem der voranstehenden Ansprüche, **dadurch gekennzeichnet, dass** der Aktuator (3, 23) aufgrund eines Stellsignals (S) verstellbar ist, welches an der Steuereinrichtung (4, 24) und/oder dem Aktuator (3, 23) anlegbar ist.

10. Vorrichtung nach einem der voranstehenden Ansprüche, **dadurch gekennzeichnet, dass** mit mindestens einem ersten Bedienelement (2, 22) mindestens ein zweites Bedienelement (2, 22) synchron oder asynchron gleich- und/oder gegensinnig verstellbar ist.

11. Vorrichtung nach einem der voranstehenden Ansprüche, **dadurch gekennzeichnet, dass** mindestens ein Aktuator (3, 23) als Schrittmotor ausgebildet ist.

12. Vorrichtung nach einem der voranstehenden Ansprüche, **dadurch gekennzeichnet, dass** bei Betätigung des Bedienelements (2, 22) über eine definierte Position dessen haptische Eigenschaft veränderbar ist.

13. Verfahren zur Einstellung und zur Erfassung der Verstellung eines Stellgliedes (1, 21), insbesondere in einem Kraftfahrzeug, welches durch einen Aktuator und durch eine manuelle Betätigung verstellbar ist, bei dem das das Stellglied (1, 21) durch einen Aktuator (3, 23) und/oder manuell durch das Bedienelement (2, 22) verstellt wird, wobei der Aktuator (3, 23), das Bedienelement 82, 22) und das Stellglied mechanisch gekoppelt sind und eine manuelle Verstellung des Stellgliedes (1, 21) durch eine Auswerteeinrichtung durch elektrische Signale des Aktuators (3, 23) sensiert wird, **dadurch gekennzeichnet, dass** mindestens eine haptische Betätigungseigenschaft des Bedienelements (2, 22) durch eine Ansteuereinrichtung des Aktuators (3, 23) und/oder durch eine Steuereinrichtung (4, 24) für den Aktuator (3, 23) vorgegeben wird.

## Claims

1. Device for adjusting a final positioning element (1, 21), in particular in a motor vehicle, having at least one manually actuable operating element (2, 22) for adjusting the final positioning element (1, 21), with it being possible for the final positioning element (1, 21) to be adjusted by means of an actuator (3, 23) and manually by means of the operating element (2, 22), and with the actuator (3, 23), the operating element (2, 22) and the final positioning element (1, 21) being mechanically coupled, and with it being possible for a manual adjustment of the operating element (2, 22) to be sensed by means of an evaluating device on the basis of at least one electrical signal of the actuator (3, 23), **characterized in that** at least one haptic actuation property of the operating element (2, 22) can be predefined by means of an activating device of the actuator (3, 23) and/or by means of a control device (4, 24) for the actuator (3, 23).

2. Device according to Claim 1, **characterized in that** it is possible for at least one instantaneous value or a time profile of the instantaneous values of an electrical voltage and/or of at least one current signal of the actuator (3, 23) to be evaluated by means of the evaluating device.

3. Device according to Claim 1 or 2, **characterized in that** the final positioning element (1, 21) and/or the operating element (2, 22) can be adjusted by an actuator (3, 23) automatically by means of a control device (4, 24).

4. Device according to one of the preceding claims, **characterized in that** at least one variable and/or at least one parameter (5) of the manual adjustment of the final positioning element (1, 21) can be displayed or detected.

5. Device according to one of the preceding claims, **characterized in that** at least one variable and/or at least one parameter (5) at least of the automatic adjustment of the final positioning element (1, 21) can be displayed or detected.

6. Device according to one of the preceding claims, **characterized in that** the actuator (3, 23) is connected by means of a coupling device (25) to the operating element (2, 22) or to the final positioning element (1, 21).

7. Device according to one of the preceding claims, **characterized in that** at least one device for detecting the position and/or the change in position (6, 26) of the operating element (2, 22) and/or of the coupling device (25) and/or of the final positioning element (1, 21) is provided.

8. Device according to one of the preceding claims, **characterized in that** the type and/or the magnitude of the adjustment of the final positioning element (1, 21) can be displayed on the operating element (2, 22) or detected.

9. Device according to one of the preceding claims, **characterized in that** the actuator (3, 23) can be adjusted on the basis of a positioning signal (S) which can be applied to the control device (4, 24) and/or to the actuator (3, 23).

10. Device according to one of the preceding claims, **characterized in that,** with at least one first operating element (2, 22), at least one second operating element (2, 22) can be adjusted synchronously or asynchronously in the same and/or opposite direction.

11. Device according to one of the preceding claims, **characterized in that** at least one actuator (3, 23) is embodied as a stepping motor.

12. Device according to one of the preceding claims, **characterized in that,** when the operating element (2, 22) is actuated beyond a defined position, its haptic property can be varied.

13. Method for adjusting and for detecting the adjustment of a final positioning element (1, 21), in particular in a motor vehicle, which final positioning element (1, 21) can be adjusted by means of an actuator and by means of a manual actuation, in which method the actuating element (1, 21) is adjusted by means of an actuator (3, 23) and/or manually by means of the operating element (2, 22), with the actuator (3, 23), the operating element (2, 22) and the final positioning element being mechanically coupled, and with a manual adjustment of the final positioning element (1, 21) being sensed by means of an evaluating device by means of electrical signals of the actuator (3, 23), **characterized in that** at least one haptic actuation property of the operating element (2, 22) can be predefined by means of an activating device of the actuator (3, 23) and/or by means of a control device (4, 24) for the actuator (3, 23).

## Revendications

1. Dispositif pour ajuster un organe de réglage (1, 21), notamment dans un véhicule automobile, comprenant au moins un élément de commande manuel (2, 22) pour l'ajustement de l'organe de réglage (1, 21), l'organe de réglage (1, 21) pouvant être réglé par un actionneur (3, 23) et manuellement par l'élément de commande (2, 22), et l'actionneur (3, 23), l'élément de commande (2, 22) et l'organe de réglage (1, 21) étant accouplés mécaniquement, un réglage manuel de l'élément de commande (2, 22) pouvant être détecté par un dispositif d'analyse sur la base d'au moins un signal électrique de l'actionneur (3, 23), **caractérisé en ce qu'**au moins une propriété d'actionnement tactile de l'élément de commande (2, 22) pouvant être prédéfinie par un dispositif de commande de l'actionneur (3, 23) et/ou par un dispositif de commande (4, 24) pour l'actionneur (3, 23).

2. Dispositif selon la revendication 1, **caractérisé en ce que** le dispositif d'analyse permet d'analyser au moins une valeur instantanée ou une allure dans le temps des valeurs instantanées d'une tension électrique et/ou au moins d'un signal de courant de l'actionneur (3, 23).

3. Dispositif selon la revendication 1 ou 2, **caractérisé en ce que** l'organe de réglage (1, 21) et/ou l'élément de commande (2, 22) peuvent être réglés par un actionneur (3, 23) automatiquement au moyen d'un dispositif de commande (4, 24).

4. Dispositif selon l'une quelconque des revendications précédentes, **caractérisé en ce qu'**au moins une valeur et/ou au moins un paramètre (5) du réglage manuel de l'organe de réglage (1, 21) peut être indiqué(e) ou reconnu(e).

5. Dispositif selon l'une quelconque des revendications précédentes, **caractérisé en ce qu'**au moins une valeur et/ou au moins un paramètre (5) d'au moins le réglage automatique de l'organe de réglage (1, 21) peut être indiqué(e) ou reconnu (e) .

6. Dispositif selon l'une quelconque des revendications précédentes, **caractérisé en ce que** l'actionneur (3, 23) est connecté par le biais d'un dispositif d'accouplement (25) à l'élément de commande (2, 22) ou à l'organe de réglage (1, 21).

7. Dispositif selon l'une quelconque des revendications précédentes, **caractérisé en ce qu'**au moins un dispositif pour détecter la position et/ou la variation de position (6, 26) de l'élément de commande (2, 22) et/ou du dispositif d'accouplement (25) et/ou de l'organe de réglage (1, 21) est prévu.

8. Dispositif selon l'une quelconque des revendications précédentes, **caractérisé en ce que** le type et/ou le degré du réglage de l'organe de réglage (1, 21) peut être indiqué ou reconnu sur l'élément de commande (2, 22).

9. Dispositif selon l'une quelconque des revendications précédentes, **caractérisé en ce que** l'actionneur (3, 23) peut être réglé sur la base d'un signal (S) qui peut être appliqué au dispositif de commande (4, 24) et/ou à l'actionneur (3, 23).

10. Dispositif selon l'une quelconque des revendications précédentes, **caractérisé en ce qu'**au moins un deuxième élément de commande (2, 22) peut être réglé de manière synchrone ou asynchrone, dans un sens identique ou opposé, avec au moins un premier élément de commande (2, 22).

11. Dispositif selon l'une quelconque des revendications précédentes, **caractérisé en ce qu'**au moins un actionneur (3, 23) est réalisé sous forme de moteur pas-à-pas.

12. Dispositif selon l'une quelconque des revendications précédentes, **caractérisé en ce que** lors de l'actionnement de l'élément de commande (2, 22) au-delà d'une position définie, sa propriété tactile peut être modifiée.

13. Procédé pour ajuster et détecter le réglage d'un organe de réglage (1, 21), notamment dans un véhicule automobile, qui peut être réglé par un actionneur et par une commande manuelle, dans lequel l'organe de réglage (1, 21) est réglé par un actionneur (3, 23) et/ou manuellement par l'élément de commande (2, 22), et l'actionneur (3, 23), l'élément de commande (2, 22) et l'organe de réglage étant accouplés mécaniquement, un réglage manuel de l'organe de réglage (1, 21) étant détecté par un dispositif d'analyse sur la base de signaux électriques de l'actionneur (3, 23), **caractérisé en ce qu'**au moins une propriété d'actionnement tactile de l'élément de commande (2, 22) est prédéfinie par un dispositif de commande de l'actionneur (3, 23) et/ou par un dispositif de commande (4, 24) pour l'actionneur (3, 23).
